# EUROPÄISCHE PATENTSCHRIFT

(11) **EP 2 148 985 B1**
(45) Veröffentlichungstag und Bekanntmachung des Hinweises auf die Patenterteilung: **12.09.2012**
(21) Anmeldenummer: 08757946.2
(22) Anmeldetag: 16.04.2008
(51) Int. Cl.: F16C 19/49, F03D 11/00, F16C 19/38, F16C 19/54

(54) **MEHRREIHIGES GROSSWÄLZLAGER, INSBESONDERE AXIAL-RADIALLAGER ZUR HAUPTLAGERUNG DER ROTORWELLE EINER WINDKRAFTANLAGE**
MULTIPLE-ROW LARGE ROLLER BEARING, ESPECIALLY AXIAL RADIAL BEARING FOR THE MAIN ARRANGEMENT OF BEARINGS OF THE ROTOR SHAFT OF A WIND POWER INSTALLATION
COURONNE D'ORIENTATION À PLUSIEURS RANGÉES, EN PARTICULIER PALIER AXIAL-RADIAL SERVANT DE PALIER PRINCIPAL À L'ARBRE DE ROTOR D'UNE ÉOLIENNE

(30) Priorität: 25.04.2007 DE 102007019482
(43) Veröffentlichungstag der Anmeldung: 03.02.2010
(73) Patentinhaber: Schaeffler Technologies AG & Co. KG, 91074 Herzogenaurach (DE)
(72) Erfinder: LÖSCHNER, Tim, 97072 Würzburg (DE); ZEIDLHACK, Rudolf, 97440 Werneck (DE)
(86) Internationale Anmeldenummer: PCT/DE2008/000643
(87) Internationale Veröffentlichungsnummer: WO 2008/131721

(56) Entgegenhaltungen:
- DE-U1-202007 011 577

## Beschreibung

### Gebiet der Erfindung

Die Erfindung betrifft ein mehrreihiges Großwälzlager nach den oberbegriffsbildenden Merkmalen des Patentanspruchs 1, und sie ist insbesondere vorteilhaft an einem Axial-Radiallager zur Hauptlagerung der Rotorwelle einer Windkraftanlage oder an Rundtischlagem oder Drehverbindungen realisierbar.

### Hintergrund der Erfindung

Großwälzlager, die zur Hauptlagerung der Rotorwelle einer Windkraftanlage oder auch zur Rundtischlagerung an Werkzeugmaschinen geeignet sind, werden zumeist als einbaufertige Lagereinheiten für kombinierte Belastungen mit hohen Anforderungen an die Laufgenauigkeit hergestellt und sind je nach Drehzahl und Einschaltdauer entweder als Axial-Radiallager oder Axial-Schrägkugellager ausgebildet. Beide Lagerausführungen nehmen radiale und beidseitig axiale Lasten sowie Kippmomente auf und sind radial und axial spielfrei vorgespannt. Während Axial-Radiallager vorwiegend in Standard-Anwendungen mit niedrigen Drehzahlen eingesetzt werden und sich in der Regel durch ein höheres, mit der Drehzahl ansteigendes Reibmoment auszeichnen, sind Axial-Schrägkugellager sehr gut für schnell drehende Anwendungen geeignet und zeichnen sich durch deutlich geringe Reibung und niedrigen Schmierstoffverbrauch aus.

Derartige Großwälzlager sind unter anderem durch den von der Anmelderin herausgegebenen Katalog "Wälzlager" vom Januar 2006 bekannt und werden beispielsweise auf den Seiten 990 bis 1019 in den genannten Ausführungsformen als Axial-Radiallager und als Axial-Schrägkugellager beschrieben.

Die gezeigten Axial-Schrägkugellager bestehen dabei im Wesentlichen aus einem ein- oder zweiteiligen inneren Lagerring und aus einem äußeren Lagerring sowie aus eine Vielzahl zwischen den Lagerringen in zwei gegeneinander angestellten Reihen nebeneinander angeordneten Lagerkugeln, die unter einem definierten Druckwinkel mit ihren Laufflächen auf mehreren nebeneinander an der Außenseite des inneren Lagerrings und an der Innenseite des äußeren Lagerrings angeordneten Laufbahnen abrollen.

Die dargestellten Axial-Radiallager bestehen dagegen im Wesentlichen aus einer senkrecht angeordneten kreisringförmigen Außenscheibe, einem koaxial zu dieser Außenscheibe angeordneten Innenring sowie zwei axial beidseitig neben der Außenscheibe angeordneten kreisringförmigen Wellenscheiben, wobei zwischen den beiden Wellenscheiben und der Außenscheibe jeweils eine Reihe durch je einen Lagerkäfig in gleichmäßigen Abständen gehaltener, als Lagernadeln oder Zylinderrollen ausgebildeter Wälzkörper abrollt und ein erstes sowie ein zweites Wälzlager zur Aufnahme axialer Kräfte bildet. Darüber hinaus ist zwischen der Außenscheibe und dem Innenring eine weitere Reihe, zumeist durch einen weiteren Lagerkäfig in gleichmäßigen Abständen gehaltener und ebenfalls als Lagernadeln oder Zylinderrollen ausgebildeter Wälzkörper angeordnet, die schließlich ein drittes Wälzlager zur Aufnahme radialer Kräfte bildet.

Des Weiteren sind auch als Doppel-Schrägrotlenlager ausgeführte Rundtischlager bekannt, bei denen anstelle von zwei Reihen Lagerkugeln zwei gegeneinander angestellte Reihen Zylinderrollen als Wälzkörper verwendet werden.

Als nachteilig bei den genannten Axial-Radiallagern hat es sich jedoch erwiesen, dass die als Lagernadeln oder Zylinderrollen ausgebildeten Wälzkörper in den beiden Wälzlagern zur Aufnahme axialer Kräfte eine ungünstige Kinematik aufweisen, da diese durch ihre axiale Anordnung mit ihren Stirnseiten auf unterschiedlichen Teilkreisen angeordnet sind und dadurch bestrebt sind, an diesen Stirnseiten mit jeweils unterschiedlichen Umlaufgeschwindigkeiten auf ihren Laufbahnen abzurollen. Da dies naturbedingt jedoch nicht möglich ist und die Wälzkörper zudem ausschließlich durch ihre Lagerkäfige geführt werden, kommt es zu einem Schräglauf bzw. zu permanenten Schränkbewegungen der Lagernadeln oder Zylinderrollen in ihren Käfigtaschen, durch die hohe Zwangskräfte auf die Lagerkäfige wirken und die ursächlich für ein relativ hohes Reibmoment sowie für eine erhöhte Wärmeentwicklung im Lager sind. Die Wärmeentwicklung im Lager und/oder die Zwangskräfte auf die Lagerkäfige können dabei kurzzeitig so hoch werden, dass es entweder zu Überhitzung und Mangelschmierung oder zum Bruch der Lagerkäfige durch Überbeanspruchung kommt, was in beiden Fällen zum vorzeitigen Ausfall des Axial-Radiallagers führt. Eine solche ungünstige Kinematik kann zwar dadurch ausgeschlossen werden, dass anstelle der beschriebenen Axial-Radiallager mit Zylinderrollen die ebenfalls beschriebenen und naturbedingt eine günstigere Kinematik aufweisenden Axial-Schrägkugellager mit Lagerkugeln verwendet werden, jedoch weisen derartige Axial-Schrägkugellager in aller Regel nicht die notwendige Tragfähigkeit auf, um extrem hohen Kräften, wie sie beispielsweise in der Hauptlagerung einer Rotorwelle einer Windkraftanlage wirken, standhalten zu können.

### Aufgabe der Erfindung

Ausgehend von den dargelegten Nachteilen der Lösungen des bekannten Standes der Technik liegt der Erfindung deshalb die Aufgabe zu Grunde, ein mehrreihiges Großwälzlager, insbesondere Axial-Radiallager zur Hauptlagerung der Rotorwelle einer Windkraftanlage zu konzipieren, bei dem die Wälzkörper der beiden Wälzlager zur Aufnahme axialer Kräfte eine günstigere Kinematik und Führung aufweisen und dadurch zu einer erhöhten Gebrauchsdauer des Axial-Radiallagers beitragen und welches zugleich für sehr hohe Traglasten geeignet ist.

### Beschreibung der Erfindung

Erfindungsgemäß wird diese Aufgabe bei einem mehrreihigen Großwälzlager mit den Merkmalen des Oberbegriffs des Anspruchs 1 gemäß den kennzeichnenden Teilen der Ansprüche 1, 3 und 5 wahlweise derart gelöst, dass die beiden Wälzlager zur Aufnahme axialer Kräfte entweder durch zwei Kegelrollenlager gebildet werden, deren als Kegelrollen ausgebildete Wälzkörper mit ihren kleineren Stirnseiten jeweils zur Lagerlängsachse gerichtet sind, oder dass die beiden Wälzlager durch ein zweireihiges Schrägkugellager gebildet werden, bei dem die beiden Reihen der als Lagerkugeln ausgebildete Wälzkörper mit definierten Druckwinkeln gegeneinander angestellt sind oder dass die beiden Wälzlager durch zwei Axialkugellager gebildet werden, bei denen die beiden Reihen der als Lagerkugeln ausgebildeten Wälzkörper auf gegenüberliegenden Teilkreisen mit gleichgroßen Durchmessern angeordnet sind.

Der Erfindung liegt somit die Erkenntnis zugrunde, dass es durch den Austausch der bisher als Zylinderrollen oder Lagernadeln ausgebildeten Wälzkörper für die beiden Wälzlager zur Aufnahme axialer Kräfte gegen als Kegelrollen oder Lagerkugeln ausgebildete Wälzkörper in einfacher Weise möglich ist, bei gleich bleibender Tragfähigkeit die Kinematik dieser Wälzlager dahingehend zu verbessern, dass die Wälzkörper an allen ihren Umfangsflächen mit gleichen Umlaufgeschwindigkeiten auf ihren Laufbahnen abrollen, so dass ein Schräglauf bzw. permanente Schränkbewegungen der Wälzkörper in ihren Käfigtaschen und die damit verbundenen Reibungsverluste zusammen mit der erhöhten Wärmeentwicklung im Lager nunmehr ausgeschlossen sind.

Bevorzugte Ausgestaltungen und vorteilhafte Weiterbildungen aller Ausführungen des erfindungsgemäß ausgebildeten mehrreihigen Großwälzlagers werden in den Unteransprüchen beschrieben.

Danach ist es gemäß Anspruch 2 bei dem erfindungsgemäß ausgebildeten Großwälzlager vorgesehen, dass bei Ausbildung der beiden Wälzlager zur Aufnahme axialer Kräfte als Kegelrollenlager jede Reihe der als Kegelrollen ausgebildeten Wälzkörper in jeweils einer durch mindestens einen Bord begrenzten Laufbahn abrollt, die komplett entweder in die Innenseiten der Wellenscheiben oder in die Außenseiten der Außenscheibe eingearbeitet ist. Dadurch ist jeweils ein Teil der Laufbahnen eben ausgebildet und ermöglicht somit die Einstellung der radialen Vorspannung sowohl der Wälzkörperreihe des Wälzlagers zur Aufnahme radialer Kräfte als auch der beiden Wälzkörperreihen der Wälzlager zur Aufnahme axialer Kräfte ohne Zwangskräfte oder elastische Verformungen. Der mindestens eine jede Laufbahn begrenzende Bord steht dabei jeweils mit den größeren Stirnseiten der Kegelrollen in Wirkverbindung und hat den Vorteil, dass die Führung der Kegelrollen in ihren Laufbahnen nicht mehr über den Lagerkäfig sondern über diesen Bord erfolgt und der Lagerkäfig lediglich noch die Funktion eines Abstandhalters hat, mit dem die Kegelrollen in Umfangsrichtung in gleichmäßigen Abständen zueinander gehalten werden.

Ausgehend von der Ausbildung der beiden Wälzlager zur Aufnahme axialer Kräfte als zweireihiges Schrägwälzlager ist es nach Anspruch 4 dagegen vorgesehen, dass jede Reihe der als Lagerkugeln ausgebildeten Wälzkörper des zweireihigen Schrägkugellagers zur Aufnahme axialer Kräfte in jeweils zwei rillenförmigen Laufbahnen abrollt, die einerseits schräg in die Innenseiten und in die Stirnseiten der Wellenscheiben sowie andererseits schräg in die Außenseiten und in die Stirnseite der Außenscheibe eingearbeitet sind. Wie bei der zuvor beschriebenen Ausführung der beiden Wälzlager zur Aufnahme axialer Kräfte als Kegelrollenlager sorgt somit auch bei dieser Ausführung die Rillenform der Laufbahnen der Wälzkörper dafür, dass die Führung der Wälzkörper nicht mehr über den Lagerkäfig sondern über ihre Laufbahnen erfolgt und der Lagerkäfig nur noch die Funktion eines Abstandhalters hat, mit dem die Lagerkugeln in Umfangsrichtung in gleichmäßigen Abständen zueinander gehalten werden.

Ähnlich wie bei der zuvor beschriebenen Ausführung ist es nach Anspruch 6 auch bei der Ausbildung der beiden Wälzlager zur Aufnahme axialer Kräfte als Axialkugellager eine vorteilhafte Weiterbildung, dass jede Reihe der als Lagerkugeln ausgebildeten Wälzkörper der beiden Axialkugellager in jeweils zwei rillenförmigen Laufbahnen abrollen, die hierbei jedoch einerseits ausschließlich in die Innenseiten der Wellenscheiben und andererseits ausschließlich in die Außenseiten der Außenscheibe eingearbeitet sind. Wie bei den anderen Ausführungsformen sorgt auch bei dieser Ausführung die Rillenform der Laufbahnen der Wälzkörper dafür, dass die Führung der Wälzkörper nicht mehr über den Lagerkäfig sondern über ihre Laufbahnen erfolgt und der Lagerkäfig nur noch die Funktion eines Abstandhalters hat, mit dem die Kegelrollen in Umfangsrichtung in gleichmäßigen Abständen zueinander gehalten werden.

Eine auf alle drei zuvor beschriebenen Ausführungen zutreffende zweckmäßige Weiterbildung des erfindungsgemäß ausgebildeten Großwälzlagers ist nach Anspruch 7 des Weiteren, dass der Innenring und die Wellenscheiben entweder durch getrennte Einzelteile gebildet werden oder der Innenring einteilig mit der einen Wellenscheibe ausgebildet ist und die andere Wellenscheibe ein getrenntes Bauteil bildet. Die Ausbildung von Innenring und Wellenscheiben als getrennte Bauteile hat sich dabei vorteilhaft hinsichtlich der Herstellungskosten der Einzelteile sowie hinsichtlich einer leichteren Montage und Demontage des Axial-Radiallagers erwiesen, während die einteilige Ausbildung des Innenrings mit einer der Wellenscheiben Vorteile bei der axialen Maßgenauigkeit des Axial-Radiallagers durch die kürzere Toleranzkette sowie hinsichtlich einer besonders hohen axialen Kippsteifigkeit bietet. Denkbar wäre in diesem Zusammenhang jedoch auch eine Ausbildung des Axial-Radiallagers, bei der eine Hälfte des Innenrings einschließlich einer Hälfte der Laufbahn für die Zylinderrollen des Wälzlagers zur Aufnahme radialer Kräfte in die eine Wellenscheibe integriert ist, während die andere Hälfte des Innenrings und die andere Hälfte der Laufbahn einteilig mit der anderen Wellenscheibe ausgebildet ist. Zur Verbindung der Einzelteile miteinander haben sich dann bei der getrennten Ausbildung von Innenring und Wellenscheiben mehrere gleichmäßig umfangsverteilte Schraubverbindungen als am vorteilhaftesten erwiesen, während bei der einteiligen Ausbildung des Innenrings mit einer der Wellenscheiben eine kraftschlüssige Verbindung aller Einzelteile durch Spannringe am geeignetsten ist, die über eine Pressverbindung mit der gelagerten Welle die eine Wellenscheibe gegen den mit der anderen Wellenscheibe kombinierten Innenring verspannen.

Schließlich wird es als vorteilhafte Ausgestaltung aller Ausführungen des erfindungsgemäß ausgebildeten Großwälzlagers durch Anspruch 8 noch vorgeschlagen, dass zur Axialspieleinstellung der als Kegelrollen-, Schrägkugel- oder Axialkugellager ausgebildeten Wälzlager zur Aufnahme axialer Kräfte entweder der Innenring durch Schleifen zumindest einer seiner Axialseiten mit einer definierten Breite ausgebildet ist oder zwischen dem Innenring und zumindest einer der Wellenscheiben ein Distanzring mit definierter Breite angeordnet ist. Alternativ zum Schleifen einer der Axialseiten des Innenringes auf eine definierte Breite ist es zur Axialspieleinstellung jedoch auch möglich, beide Axialseiten des Innenringes oder auch beide Innenseiten der Wellenscheiben entsprechend spanend zu bearbeiten oder durch Beschichtungen deren Axialmaß zu beeinflussen. Da eine solche Bearbeitung fertigungstechnisch jedoch relativ aufwändig und kostenintensiv ist, hat sich die Axialspieleinstellung über einen Distanzring sowohl aus Kostengründen als auch dadurch am vorteilhaftesten erwiesen, dass hierbei auch eventuelle Bearbeitungsfehler in der Breite des Distanzringes durch den Austausch gegen einen passenden Distanzring relativ einfach ausgleichbar sind.

Zusammenfassend weist das erfindungsgemäß ausgebildete Axial-Radiallager somit in allen beschriebenen Ausführungen gegenüber den aus dem Stand der Technik bekannten Axial-Radiallagern den Vorteil auf, dass die als Kegelrollen oder Lagerkugeln ausgebildeten Wälzkörper der beiden Wälzlager zur Aufnahme axialer Kräfte gegenüber den bisher verwendeten Zylinderrollen oder Lagernadeln eine günstigere Kinematik und anstelle der Käfigführung eine Bordführung aufweisen, so dass permanente Schränkbewegungen der Wälzkörper in ihren Käfigtaschen mit Reibungsverlusten und erhöhter Wärmeentwicklung im Lager sowie hohe Zwangskräfte auf deren Lagerkäfige wirksam vermieden werden und die Gebrauchsdauer des Axial-Radiallagers wesentlich erhöht wird. Da als Wälzlager zur Aufnahme radiale Kräfte nach wie vor ein einreihiges, vollrollig oder mit Lagerkäfig ausgebildetes Zylinderrollenlager zur Anwendung kommt, ist das Axial-Radiallager gleichzeitig auch für sehr hohe Traglasten geeignet.

Darüber hinaus wird es als selbstverständlich erachtet, dass der Fachmann zu den beschriebenen Lagerausbildungen auch äquivalente Lösungen in Betracht zieht, bei denen beispielsweise die Wellenscheiben nicht mit dem Innenring sondern mit dem Außenring des Axial-Radiallagers verbunden sind, so dass die erfindungsgemäß verwendeten Wälzkörper für die Wälzlager zur Aufnahme axialer Kräfte alternativ zwischen den Wellenscheiben sowie dem dann kreisringförmigen Innenring in entsprechenden Laufbahnen abrollen und die beschriebene ein- oder mehrteilige Ausführung von Innenring und Wellenscheiben dann auf den Außenring des Axial-Radiallagers anzuwenden ist. Ebenso versteht es sich, dass sowohl der Innenring als auch die Außenscheibe des Axial-Radiallagers wahlweise mit der Umgebungskonstruktion, wie beispielsweise dem Maschinenträger der Windkraftanlage verbunden sein kann und dass sowohl das Wälzlager zur Aufnahme radialer Kräfte als auch die Wälzlager zur Aufnahme axialer Kräfte im Bedarfsfall nicht nur einreihig sondern auch mehrreihig ausgebildet sein können.

Auch Mischformen der beschriebenen Ausführungen für die Wälzlager zur Aufnahme axialer Kräfte sind im Bedarfsfall denkbar, so dass diese beispielsweise bei axial einseitig überwiegenden Lagerkräften einerseits als Kegelrollenlager und andererseits als Axial- oder Schrägkugellager oder in anderer Kombination ausgebildet sein können.

### Kurze Beschreibung der Zeichnungen

Das erfindungsgemäß ausgebildete mehrreihige Großwälzlager wird nachfolgend anhand dreier bevorzugter Ausführungsformen unter Bezugnahme auf die beigefügten Zeichnungen näher erläutert. Dabei zeigen:
- Figur 1: eine Teilansicht eines Querschnittes durch eine erste Ausführungsform eines erfindungsgemäß ausgebildeten mehrreihigen Großwälzlagers;
- Figur 2: eine Teilansicht eines Querschnittes durch eine Variante der ersten Ausführungsform eines erfindungsgemäß ausgebildeten mehrreihigen Großwälzlagers;
- Figur 3: eine Teilansicht eines Querschnittes durch eine zweite Ausführungsform eines erfindungsgemäß ausgebildeten mehrreihigen Großwälzlagers;
- Figur 4: eine Teilansicht eines Querschnittes durch eine Variante der zweiten Ausführungsform eines erfindungsgemäß ausgebildeten mehrreihigen Großwälzlagers;
- Figur 5: eine Teilansicht eines Querschnittes durch eine dritte Ausführungsform eines erfindungsgemäß ausgebildeten mehrreihigen Großwälzlagers;
- Figur 6: eine Teilansicht eines Querschnittes durch eine Variante der dritten Ausführungsform eines erfindungsgemäß ausgebildeten mehrreihigen Großwälzlagers.

### Ausführliche Beschreibung der Zeichnungen

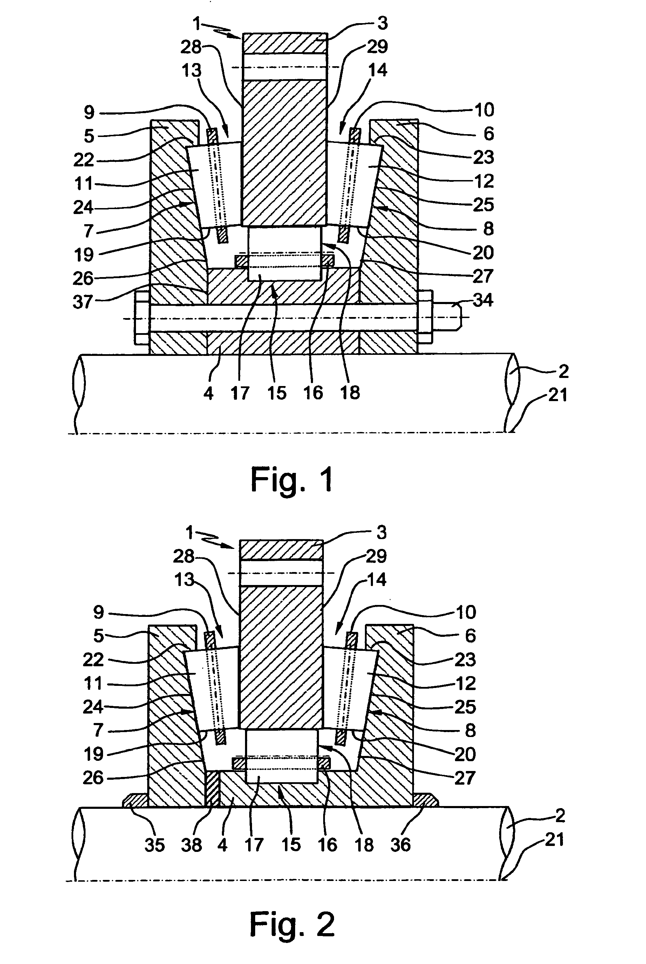

In den Figuren 1 bis 6 ist jeweils ein als dreireihiges Axial-Radiallager 1 ausgebildetes mehrreihiges Großwälzlager dargestellt, welches im Wesentlichen aus einer senkrecht angeordneten kreisringförmigen Außenscheibe 3 und einem koaxial zu dieser Außenscheibe 3 angeordneten Innenring 4 sowie zwei axial beidseitig neben der Außenscheibe 3 angeordneten kreisringförmigen Wellenscheiben 5, 6 besteht. Deutlich erkennbar rollen dabei zwischen den beiden Wellenscheiben 5, 6 und der Außenscheibe 3 jeweils eine Reihe 7, 8 durch je einen Lagerkäfig 9, 10 in gleichmäßigen Abständen gehaltener Wälzkörper 11, 12 ab, so dass durch diese ein erstes sowie ein zweites Wälzlager 13, 14 zur Aufnahme axialer Kräfte gebildet wird. Darüber hinaus ist zwischen der Außenscheibe 3 und dem Innenring 4 eine weitere Reihe 15 durch einen weiteren Lagerkäfig 16 in gleichmäßigen Abständen gehaltener Wälzkörper 17 angeordnet, die als Zylinderrollen ausgebildet sind und ein drittes Wälzlager 18 zur Aufnahme radialer Kräfte bilden.

Aus den Figuren 1 und 2 geht des Weiteren hervor, dass die beiden Wälzlager 13, 14 zur Aufnahme axialer Kräfte in einer ersten kinematisch optimierten Ausführungsform erfindungsgemäß durch zwei Kegelrollenlager gebildet werden, deren als Kegelrollen ausgebildete Wälzkörper 11, 12 mit ihren kleineren Stirnseiten 19, 20 jeweils zur Lagerlängsachse 21 gerichtet sind. Jede Reihe 7, 8 der als Kegelrollen ausgebildeten Wälzkörper 11, 12 der beiden Wälzlager 13, 14 zur Aufnahme axialer Kräfte rollt dabei in jeweils einer durch einen Bord 22, 23 begrenzten Laufbahn 24, 25 ab, die komplett in die Innenseiten 26, 27 der Wellenscheiben 5, 6 eingearbeitet ist. Der jede Laufbahn 24, 25 begrenzende Bord 22, 23 steht dabei jeweils mit den nicht näher bezeichneten größeren Stirnseiten der als Kegelrollen ausgebildeten Wälzkörper 11, 12 in Wirkverbindung und bewirkt, dass die Führung der Kegelrollen in ihren Laufbahnen 24, 25 über diesen Bord 22, 23 und nicht über den lediglich als Abstandhalter dienenden Lagerkäfig 9, 10 erfolgt.

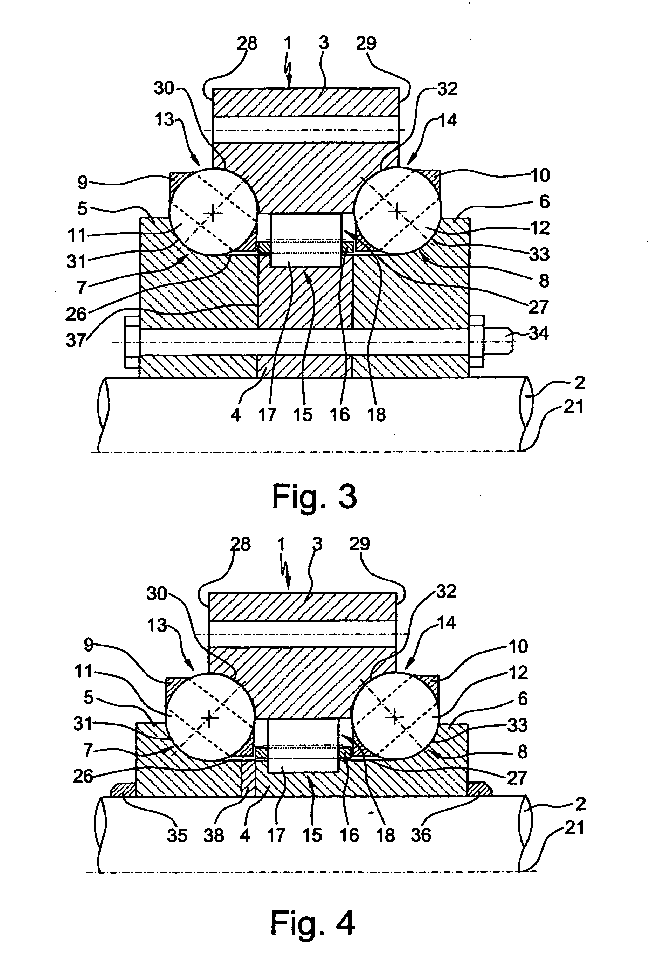

In den Figuren 3 und 4 ist dagegen dargestellt, dass die beiden Wälzlager 13, 14 zur Aufnahme axialer Kräfte in einer zweiten kinematisch optimierten Ausführungsform erfindungsgemäß durch ein zweireihiges Schrägkugellager gebildet werden, bei dem die beiden Reihen 7, 8 der als Lagerkugeln ausgebildeten Wälzkörper 11, 12 mit definierten Druckwinkeln in O-Anordnung gegeneinander angestellt sind. Dabei rollt jede Reihe 7, 8 der als Lagerkugeln ausgebildeten Wälzkörper 11, 12 des Schrägkugellagers zur Aufnahme axialer Kräfte in jeweils zwei rillenförmigen Laufbahnen 30, 31 und 32, 33 ab, die einerseits schräg in die Innenseiten 26, 27 und in die nicht näher bezeichneten Stirnseiten der Wellenscheiben 5, 6 sowie andererseits schräg in die Außenseiten 28, 29 und in die ebenfalls nicht näher bezeichnete Stirnseite der Außenscheibe 3 eingearbeitet sind. Somit sorgt auch bei dieser Ausführung die Rillenform der Laufbahnen 30, 31, 32, 33 dafür, dass die Führung der Wälzkörper 11, 12 nicht mehr über die Lagerkäfige 9, 10 sondern über ihre Laufbahnen 30, 31, 32, 33 erfolgt und die Lagerkäfige 9, 10 nur noch die Funktion eines Abstandhalters haben.

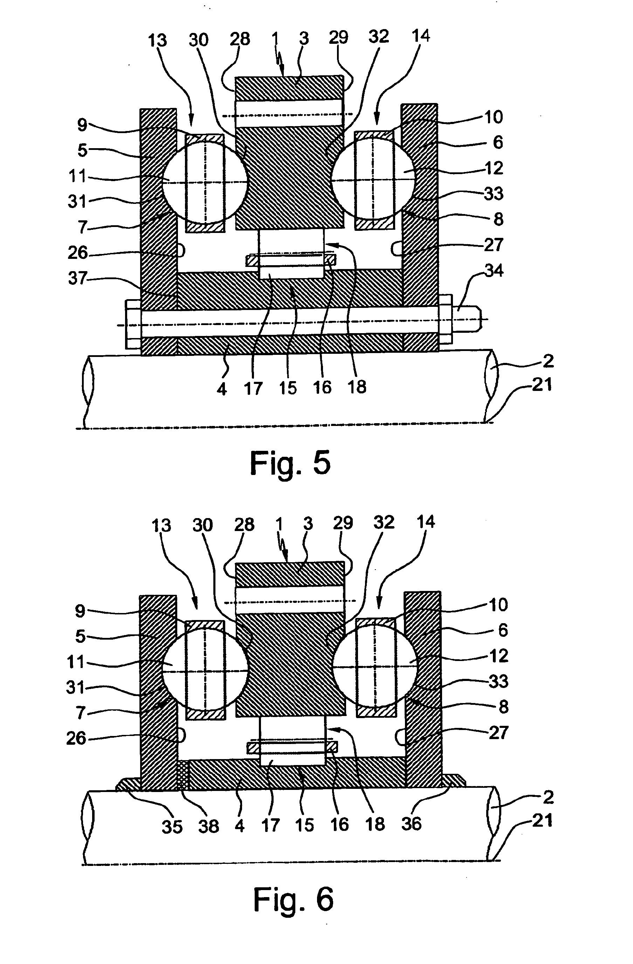

In den Figuren 5 und 6 wird darüber hinaus noch gezeigt, dass die beiden Wälzlager 13, 14 zur Aufnahme axialer Kräfte in einer dritten kinematisch optimierten Ausführungsform erfindungsgemäß durch zwei Axialkugellager gebildet werden, bei denen die beiden Reihen 7, 8 der als Lagerkugeln ausgebildeten Wälzkörper 11, 12 auf gegenüberliegenden Teilkreisen mit gleichgroßen Durchmessern angeordnet sind. Dabei rollt jede Reihe 7, 8 der als Lagerkugeln ausgebildeten Wälzkörper 11, 12 der Axialkugellager in jeweils zwei rillenförmigen Laufbahnen 30, 31 und 32, 33 ab, die einerseits ausschließlich in die Innenseiten 26, 27 der Wellenscheiben 5, 6 und andererseits ausschließlich in die Außenseiten 28, 29 der Außenscheibe 3 eingearbeitet sind. Somit sorgt auch bei dieser Ausführung die Rillenform der Laufbahnen 30, 31, 32, 33 dafür, dass die Führung der Wälzkörper 11, 12 nicht mehr über die Lagerkäfige 9, 10 sondern über ihre Laufbahnen 30, 31, 32, 33 erfolgt und die Lagerkäfige 9, 10 nur noch die Funktion eines Abstandhalters haben.

Schließlich ist den Figuren 1, 3 und 5 noch entnehmbar, dass bei diesen Ausführungsformen der Innenring 4 und die Wellenscheiben 5, 6 des Axial-Radiallagers 1 durch getrennte Einzelteile gebildet werden und dass alle Einzelteile durch Schraubverbindungen 34 kraftschlüssig miteinander verbunden sind. Zur Axialspieleinstellung der als Kegelrollen- oder Schrägkugellager ausgebildeten Wälzlager 13, 14 ist der Innenring 4 darüber hinaus an seiner Axialseite 37 durch Schleifen bearbeitet, so dass dieser eine definierte Breite aufweist.

Die in den Figuren 2 und 4 gezeigten Varianten unterscheiden sich von den zuvor beschriebenen Ausführungsformen dagegen dadurch, dass der Innenring 4 einteilig mit der einen Wellenscheibe 6 ausgebildet ist und die andere Wellenscheibe 5 ein getrenntes Bauteil bildet. Hierbei werden alle Einzelteile durch mit der Rotorwelle 2 in Pressverbindung stehende Spannringe 35, 36 kraftschlüssig miteinander verbunden und zur Axialspieleinstellung der als Kegelrollen- oder Schrägkugellager ausgebildeten Wälzlager 13, 14 ist zwischen dem Innenring 4 und der Wellenscheibe 5 ein Distanzring 38 mit definierter Breite angeordnet.

### Bezugszahlenliste

- 1: Axial-Radiallager
- 2: Rotorwelle
- 3: Außenscheibe
- 4: Innenring
- 5: Wellenscheibe
- 6: Wellenscheibe
- 7: Reihe von 11
- 8: Reihe von 12
- 9: Lagerkäfig von 7
- 10: Lagerkäfig von 8
- 11: Wälzkörper
- 12: Wälzkörper
- 13: Wälzlager axial
- 14: Wälzlager axial
- 15: Reihe von 17
- 16: Lagerkäfig von 15
- 17: Wälzkörper
- 18: Wälzlager radial
- 19: Stirnseite von 11
- 20: Stirnseite von 12
- 21: Lagerlängsachse
- 22: Bord an 24
- 23: Bord an 25
- 24: Laufbahn für 7
- 25: Laufbahn für 8
- 26: Innenseite von 5
- 27: Innenseite von 6
- 28: Außenseite von 3
- 29: Außenseite von 3
- 30: Laufbahn für 7
- 31: Laufbahn für 7
- 32: Laufbahn für 8
- 33: Laufbahn für 8
- 34: Schraubverbindung
- 35: Spannring
- 36: Spannring
- 37: Axialseite von 4
- 38: Distanzring

## Patentansprüche

1. Mehrreihiges Großwälzlager, insbesondere Axial-Radiallager (1) zur Hauptlagerung der Rotorwelle (2) einer Windkraftanlage, im Wesentlichen bestehend aus einer senkrecht angeordneten kreisringförmigen Außenscheibe (3), einem koaxial zu dieser Außenscheibe (3) angeordneten Innenring (4) sowie zwei axial beidseitig neben der Außenscheibe (3) angeordneten kreisringförmigen Wellenscheiben (5, 6), wobei zwischen den beiden Wellenscheiben (5, 6) und der Außenscheibe (3) zumindest jeweils eine Reihe (7, 8) durch je einen Lagerkäfig (9, 10) in gleichmäßigen Abständen gehaltener Wälzkörper (11, 12) abrollt und ein erstes sowie ein zweites Wälzlager (13, 14) zur Aufnahme axialer Kräfte bildet, während zwischen der Außenscheibe (3) und dem Innenring (4) zumindest eine weitere Reihe (15), optional durch einen weiteren Lagerkäfig (16) in gleichmäßigen Abständen gehaltener Wälzkörper (17) angeordnet ist und ein drittes Wälzlager (18) zur Aufnahme radialer Kräfte bildet, **dadurch gekennzeichnet, dass** die beiden Wälzlager (13, 14) zur Aufnahme axialer Kräfte durch zwei Kegelrollenlager gebildet werden, deren als Kegelrollen ausgebildete Wälzkörper (11, 12) mit ihren kleineren Stirnseiten (19, 20) jeweils zur Lagerlängsachse (21) gerichtet sind.

2. Mehrreihiges Großwälzlager nach Anspruch 1, **dadurch gekennzeichnet, dass** jede Reihe (7, 8) der als Kegelrollen ausgebildeten Wälzkörper (11, 12) der beiden Kegelrollenlager in jeweils einer durch mindestens einen Bord (22, 23) begrenzten Laufbahn (24, 25) abrollt, die komplett entweder in die Innenseiten (26, 27) der Wellenscheiben (5, 6) oder in die Außenseiten (28, 29) der Außenscheibe (3) eingearbeitet ist.

3. Mehrreihiges Großwälzlager mit den Merkmalen des Oberbegriffs des Anspruchs 1, **dadurch gekennzeichnet, dass** die beiden Wälzlager (13, 14) zur Aufnahme axialer Kräfte durch ein zweireihiges Schrägkugellager gebildet werden, bei dem die beiden Reihen (7, 8) der als Lagerkugeln ausgebildeten Wälzkörper (11, 12) mit definierten Druckwinkeln gegeneinander angestellt sind.

4. Mehrreihiges Großwälzlager nach Anspruch 3, **dadurch gekennzeichnet, dass** jede Reihe (7, 8) der als Lagerkugeln ausgebildeten Wälzkörper (11, 12) des Schrägkugellagers in jeweils zwei rillenförmigen Laufbahnen (30, 31 und 32, 33) abrollt, die einerseits schräg in die Innenseiten (26, 27) und in die Stirnseiten der Wellenscheiben (5, 6) sowie andererseits schräg in die Außenseiten (28, 29) und in die Stirnseite der Außenscheibe (3) eingearbeitet sind.

5. Mehrreihiges Großwälzlager mit den Merkmalen des Oberbegriffs des Anspruchs 1, **dadurch gekennzeichnet, dass** die beiden Wälzlager (13, 14) zur Aufnahme axialer Kräfte durch zwei Axialkugellager gebildet werden, bei denen die beiden Reihen (7, 8) der als Lagerkugeln ausgebildeten Wälzkörper (11, 12) auf gegenüberliegenden Teilkreisen mit gleich großen Durchmessern angeordnet sind.

6. Mehrreihiges Großwälzlager nach Anspruch 5, **dadurch gekennzeichnet, dass** jede Reihe (7, 8) der als Lagerkugeln ausgebildeten Wälzkörper (11, 12) der beiden Axialkugellager in jeweils zwei rillenförmigen Laufbahnen (30, 31 und 32, 33) abrollen, die einerseits in die Innenseiten (26, 27) der Wellenscheiben (5, 6) und andererseits in die Außenseiten (28, 29) der Außenscheibe (3) eingearbeitet sind.

7. Mehrreihiges Großwälzlager nach den Ansprüchen 2, 4 und 6, **dadurch gekennzeichnet, dass** der Innenring (4) und die Wellenscheiben (5, 6) entweder durch getrennte Einzelteile gebildet werden oder der Innenring (4) einteilig mit der einen Wellenscheibe (6) ausgebildet ist und die andere Wellenscheibe (5) ein getrenntes Bauteil bildet, wobei alle Einzelteile entweder durch Schraubverbindungen (34) oder durch Spannringe (35, 36) kraftschlüssig miteinander verbunden sind.

8. Mehrreihiges Großwälzlager nach Anspruch 7, **dadurch gekennzeichnet, dass** zur Axialspieleinstellung der als Kegelrollenlager, Schrägkugellager oder Axialkugellager ausgebildeten Wälzlager (13, 14) entweder der Innenring (4) durch Schleifen zumindest einer seiner Axialseiten (37) mit einer definierten Breite ausgebildet ist oder zwischen dem Innenring (4) und zumindest einer der Wellenscheiben (5, 6) ein Distanzring (38) mit definierter Breite angeordnet ist.

## Claims

1. Multi-row large rolling bearing, in particular axial-radial bearing (1) for the main bearing arrangement of the rotor shaft (2) of a wind power installation, substantially composed of a vertically-arranged circular-ring-shaped outer disk (3), an inner ring (4) arranged coaxially with respect to said outer disk (3), and two circular-ring-shaped shaft disks (5, 6) arranged axially adjacent to the outer disk (3) at both sides, with at least in each case one row (7, 8) of rolling bodies (11, 12), held at uniform intervals by in each case one bearing cage (9, 10), rolling between the two shaft disks (5, 6) and the outer disk (3) and forming a first and a second rolling bearing (13, 14) for absorbing axial forces, while at least one further row (15) of rolling bodies (17), optionally held at uniform intervals by a further bearing cage (16), being arranged between the outer disk (3) and the inner ring (4) and forming a third rolling bearing (18) for absorbing radial forces, **characterized in that** the two rolling bearings (13, 14) for absorbing axial forces are formed by two tapered-roller bearings whose rolling bodies (11, 12), which are designed as tapered rollers, are aligned with their relatively small end sides (19, 20) in each case toward the bearing longitudinal axis (21).

2. Multi-row large rolling bearing according to Claim 1, **characterized in that** each row (7, 8) of the rolling bodies (11, 12), which are designed as tapered rollers, of the two tapered-roller bearings rolls in in each case one raceway (24, 25) which is bounded by at least one rim (22, 23) and which is formed entirely either into the inner sides (26, 27) of the shaft disks (5, 6) or into the outer sides (28, 29) of the outer disk (3).

3. Multi-row large rolling bearing having the features of the preamble of Claim 1, **characterized in that** the two rolling bearings (13, 14) for absorbing axial forces are formed by a double-row angular-contact ball bearing in which the two rows (7, 8) of the rolling bodies (11, 12), which are designed as bearing balls, are inclined in relation to one another with defined pressure angles.

4. Multi-row large rolling bearing according to Claim 3, **characterized in that** each row (7, 8) of the rolling bodies (11, 12), which are designed as bearing balls, of the angular-contact ball bearing rolls in in each case two groove-shaped raceways (30, 31 and 32, 33) which are formed firstly obliquely into the inner sides (26, 27) and into the end sides of the shaft disks (5, 6) and secondly obliquely into the outer sides (28, 29) and into the end side of the outer disk (3).

5. Multi-row large rolling bearing having the features of the preamble of Claim 1, **characterized in that** the two rolling bearings (13, 14) for absorbing axial forces are formed by two axial ball bearings in which the two rows (7, 8) of the rolling bodies (11, 12), which are designed as bearing balls, are arranged on opposite pitch circles with equal diameters.

6. Multi-row large rolling bearing according to Claim 5, **characterized in that** each row (7, 8) of the rolling bodies (11, 12), which are designed as bearing balls, of the two axial ball bearings rolls in in each case two groove-shaped raceways (30, 31 and 32, 33) which are formed firstly into the inner sides (26, 27) of the shaft disks (5, 6) and secondly into the outer sides (28, 29) of the outer disk (3).

7. Multi-row large rolling bearing according to Claims 2, 4 and 6, **characterized in that** the inner ring (4) and the shaft disks (5, 6) are formed either by separate individual parts or the inner ring (4) is formed in one piece with the one shaft disk (6) and the other shaft disk (5) forms a separate component, with all the individual parts being connected to one another in a non-positively locking fashion either by means of screw connections (34) or by means of clamping rings (35, 36).

8. Multi-row large rolling bearing according to Claim 7, **characterized in that**, to set the axial play of the rolling bearings (13, 14) which are designed as tapered-roller bearings, angular-contact ball bearings or axial ball bearings, either the inner ring (4) is formed with a defined width by means of grinding of at least one of its axial sides (37), or a spacer ring (38) with a defined width is arranged between the inner ring (4) and at least one of the shaft disks (5, 6).

## Revendications

1. Couronne d'orientation à plusieurs rangées, en particulier roulement axial-radial (1) pour l'appui principal de l'arbre de rotor (2) d'une éolienne, se composant essentiellement d'un disque extérieur (3) de forme annulaire circulaire disposé verticalement, d'une bague intérieure (4) disposée coaxialement à ce disque extérieur (3) ainsi que de deux disques d'arbre (5, 6) de forme annulaire circulaire disposés axialement de part et d'autre à côté du disque extérieur (3), dans laquelle au moins chaque fois une rangée (7, 8) de corps de roulement (11, 12) maintenus à des distances uniformes chaque fois par une cage de palier (9, 10) roule entre les deux disques d'arbre (5, 6) et le disque extérieur (3) et forme un premier ainsi qu'un deuxième paliers à roulement (13, 14) destinés à reprendre des forces axiales, tandis qu'au moins une autre rangée (15) de corps de roulement (17) optionnellement maintenus à des distances uniformes par une autre cage de palier (16) est disposée entre le disque extérieur (3) et la bague intérieure (4) et forme un troisième palier à roulement (18) destiné à reprendre des forces radiales, **caractérisée en ce que** les deux paliers à roulement (13, 14) destinés à reprendre des forces axiales sont formés par deux paliers à rouleaux coniques, dont les corps de roulement (11, 12) en forme de rouleaux coniques sont orientés chaque fois avec leur plus petite face frontale (19, 20) vers l'axe longitudinal du palier (21).

2. Couronne d'orientation à plusieurs rangées selon la revendication 1, **caractérisée en ce que** chaque rangée (7, 8) des corps de roulement (11, 12) en forme de rouleaux coniques de deux paliers à rouleaux coniques roule respectivement dans une piste de roulement (24, 25) limitée par au moins un rebord (22, 23), qui est usinée complètement soit dans les faces intérieures (26, 27) des disques d'arbre (5, 6) soit dans les faces extérieures (28, 29) du disque extérieur (3).

3. Couronne d'orientation à plusieurs rangées avec les caractéristiques du préambule de la revendication 1, **caractérisée en ce que** les deux paliers à roulement (13, 14) destinés à reprendre des forces axiales sont formés par un roulement à billes à contact oblique à deux rangées, dans lequel les deux rangées (7, 8) des corps de roulement (11, 12) en forme de billes de roulement sont inclinées l'une par rapport à l'autre avec des angles de pression définis.

4. Couronne d'orientation à plusieurs rangées selon la revendication 3, **caractérisée en ce que** chaque rangée (7, 8) de corps de roulement (11, 12) en forme de billes de roulement du roulement à billes à contact oblique roule respectivement dans deux pistes de roulement en forme de rainures (30, 31 et 32, 33), qui sont usinées d'une part en oblique dans les faces intérieures (26, 27) et dans les faces frontales des disques d'arbre (5, 6) ainsi que d'autre part en oblique dans les faces extérieures (28, 29) et dans la face frontale du disque extérieur (3).

5. Couronne d'orientation à plusieurs rangées avec les caractéristiques du préambule de la revendication 1, **caractérisée en ce que** les deux paliers à roulement (13, 14) destinés à reprendre des forces axiales sont formés par deux roulements à billes axiaux, dans lesquels les deux rangées (7, 8) des corps de roulement (11, 12) en forme de billes de roulement sont disposées sur des cercles partiels opposés présentant des diamètres égaux.

6. Couronne d'orientation à plusieurs rangées selon la revendication 5, **caractérisée en ce que** chaque rangée (7, 8) des corps de roulement (11, 12) en forme de billes de roulement des deux roulements à billes axiaux roule respectivement dans deux pistes de roulement en forme de rainures (30, 31 et 32, 33) , qui sont usinées d'une part dans les faces intérieures (26, 27) des disques d'arbre (5, 6) et d'autre part dans les faces extérieures (28, 29) du disque extérieur (3).

7. Couronne d'orientation à plusieurs rangées selon les revendications 2, 4 et 6, **caractérisée en ce que** la bague intérieure (4) et les disques d'arbre (5, 6) sont formés par des pièces constitutives séparées ou la bague intérieure (4) est réalisée d'une seule pièce avec un premier disque d'arbre (6) et l'autre disque d'arbre (5) forme un composant séparé, dans laquelle toutes les pièces constitutives sont assemblées les unes aux autres par complémentarité de force par des assemblages vissés (34) ou par des anneaux de serrage (35, 36).

8. Couronne d'orientation à plusieurs rangées selon la revendication 7, **caractérisée en ce que**, pour le réglage du jeu axial des paliers à roulement (13, 14) en forme de roulements à rouleaux obliques, roulements à billes à contact oblique ou roulements à billes axiaux, soit la bague intérieure (4) est réalisée avec une largeur définie par meulage d'au moins une de ses faces axiales (37) soit une bague d'écartement (38) de largeur définie est disposée entre la bague intérieure (4) et au moins un des disques d'arbre (5, 6).
